# EUROPEAN PATENT APPLICATION

(11) **EP 3 731 429 A1**
(43) Date of publication of application: **28.10.2020**
(21) Application number: 17935375.0
(22) Date of filing: 21.12.2017
(51) Int. Cl.: H04B 7/06

(54) **USER DEVICE AND BASE STATION DEVICE**

(71) Applicant: NTT DOCOMO, INC., Chiyoda-ku Tokyo 100-6150 (JP)
(72) Inventor: YOSHIOKA, Shohei, Tokyo 100-6150 (JP); NAGATA, Satoshi, Tokyo 100-6150 (JP); KAKISHIMA, Yuichi, Palo Alto, California 94304 (US)
(74) Representative: Hoffmann Eitle
(86) International application number: PCT/JP2017/046041
(87) International publication number: WO 2019/123623

(57) **Abstract**

A user apparatus communicates with a base station apparatus via radio signals to which beamforming is applied, the user apparatus including a receiving unit configured to receive a beam transmitted from the base station apparatus; a control unit configured to execute measurement of reception power and interference power of the beam transmitted from the base station apparatus; and a transmitting unit configured to transmit information based on a result of the measurement to the base station apparatus.

## Description

### [Technical Field]

The present invention relates to a user apparatus and a base station apparatus in a radio communication system.

### [Background Art]

In LTE (Long Term Evolution) and the successor system of LTE (for example, LTE-A (LTE Advanced), NR (New Radio) (also referred to as 5G)), a higher frequency band than LTE is used. In a high frequency band, the propagation loss increases, and, therefore, in order to compensate for the propagation loss, improvement of the reception power by applying beamforming with a narrow beam width has been discussed, (see, for example, Non-Patent Literature 1 and Non-Patent Literature 2).

### [Citation List]

### [Non-Patent Literature]

[NPTL 1]
   3GPP TS 36.211 V14.4.0 (2017-09)
[NPTL 2]
   3GPP TS 36.331 V14.4.0 (2017-09)

### [Summary of Invention]

### [Technical Problem]

However, when beamforming is applied to radio signals transmitted from a base station apparatus or a user apparatus in NR, there has been a problem that the method of measuring the beam, the beam selection method of selecting which beam is to be received among a plurality of beams that are transmitted, and the criterion of switching the beam in the case where the reception device moves, etc., have not been clearly defined.

The present invention has been made in view of the above problems, and it is an object of the present invention to provide a measurement method and a beam selection criterion that enable the selection of an appropriate beam, when performing transmission by applying beamforming.

### [Solution to Problem]

According to the disclosed technology, there is provided a user apparatus for communicating with a base station apparatus via radio signals to which beamforming is applied, the user apparatus including a receiving unit configured to receive a beam transmitted from the base station apparatus; a control unit configured to execute measurement of reception power and interference power of the beam transmitted from the base station apparatus; and a transmitting unit configured to transmit information based on a result of the measurement to the base station apparatus.

### [Advantageous Effects of Invention]

According to the disclosed technology, it is possible to provide a measurement method and a beam selection criterion that enable the selection of an appropriate beam, when performing transmission by applying beamforming.

### [Brief Description of Drawings]

FIG. 1A is a diagram illustrating an example in which a base station apparatus 100 performs transmission without applying beamforming.
FIG. 1B is a diagram illustrating an example in which the base station apparatus 100 performs transmission by applying beamforming.
FIG. 2A is a diagram illustrating an example in which a user apparatus 200 selects and receives a plurality of beams transmitted from the base station apparatus 100.
FIG. 2B is a diagram illustrating an example of receiving a beam transmitted from the base station apparatus 100 when the user apparatus 200 moves.
FIG. 3 is a sequence diagram for describing a process in which the user apparatus 200 according to the embodiment of the present invention reports the measurement result to the base station apparatus 100.
FIG. 4 is a diagram illustrating an example in which the user apparatus 200 according to the embodiment of the present invention reports the measurement result to the base station apparatus 100.
FIG. 5 is a sequence diagram for describing a recovery process at the time of detecting a beam failure according to the embodiment of the present invention.
FIG. 6 is a diagram illustrating an example of a process in which the user apparatus 200 according to the embodiment of the present invention requests recovery to the base station apparatus 100.
FIG. 7 is a diagram illustrating a functional configuration example of the base station apparatus 100 according to an embodiment of the present invention.
FIG. 8 is a diagram illustrating a functional configuration example of the user apparatus 200 according to an embodiment of the present invention.
FIG. 9 is a diagram illustrating an example of a hardware configuration of the base station apparatus 100 or the user apparatus 200 according to an embodiment of the present invention.

### [Description of embodiment]

Hereinafter, an embodiment of the present invention will be described with reference to the drawings. Note that the embodiment described below is merely an example, and an embodiment to which the present invention is applied is not limited to the following embodiment.

In the operation of the radio communication system of the present embodiment, the existing technology is appropriately used. The existing technology is, for example, existing LTE; however, the existing technology is not limited to the existing LTE. Furthermore, the term "LTE" used in the present specification has a broad meaning including LTE-Advanced and methods after LTE-Advanced (for example, NR), unless otherwise specified.

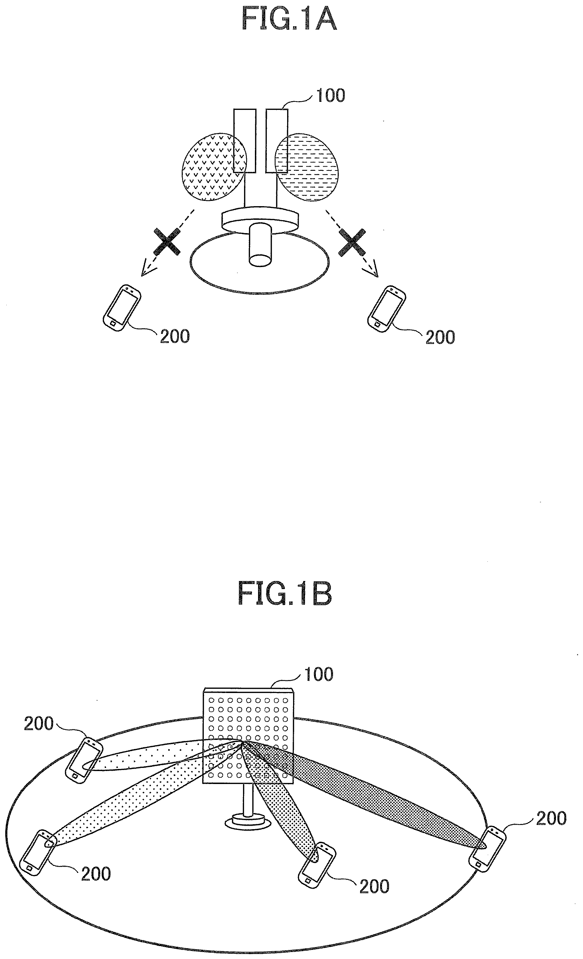

FIG. 1A is a diagram illustrating an example in which a base station apparatus 100 performs transmission without applying beamforming, and FIG. 1B is a diagram illustrating an example in which the base station apparatus 100 performs transmission without applying beamforming. A radio communication system according to the embodiment of the present invention includes a plurality of user apparatuses 200, as illustrated in FIG. 1A or 1B. Although two or four user apparatuses 200 are illustrated in FIG. 1A or 1B, this is an example, and there may be even more user apparatuses. Hereinafter, the user apparatus 200 is also referred to as "UE". The user apparatus 200 may be a communication device having a radio communication function such as a smartphone, a mobile phone, a tablet, a wearable terminal, a communication device mounted on a vehicle, and a communication module for M2M (Machine-to-Machine), etc. The user apparatus 200 wirelessly connects to the base station apparatus 100 and uses various communication services provided by the radio communication system. The user apparatus 200 can transmit and receive radio signals by applying beamforming. In the embodiment of the present invention, it is assumed that communication using beamforming is mainly communication using a millimeter wave band.

As illustrated in FIG. 1A, when beamforming is not applied, the reaching distance of radio signals is not extended as compared with the case where beamforming is applied, and, therefore, the cell radius is relatively reduced. Therefore, in the case illustrated in FIG. 1B, even when the user apparatus 200 is positioned at a distance from the base station apparatus 100 where radio signals reach the user apparatus 200 when beamforming is applied, there are cases where radio signals do not arrive at the user apparatus 200 when beamforming is not applied. That is, in FIG. 1B, when beamforming is applied, the reaching distance of the radio signals transmitted from the base station apparatus 100 increases, and in the user apparatus 200, the reception power is increased as compared with the case where beamforming is not applied, and therefore a favorable reception environment can be obtained.

Note that in the present embodiment, the duplex method may be the TDD (Time Division Duplex) method, the FDD (Frequency Division Duplex) method, or other methods (for example, the Flexible Duplex method). Furthermore, in the following description, transmitting a signal using a transmission beam may be transmitting a signal multiplied by a precoding vector (precoded with a precoding vector). Similarly, receiving a signal using a reception beam may be performed by multiplying the received signal by a predetermined weight vector. Furthermore, transmitting a signal using a transmission beam may be expressed as transmitting a signal by a specific antenna port. Similarly, receiving a signal using a reception beam may be expressed as receiving a signal by specific antenna port. The antenna port refers to a logical antenna port or a physical antenna port defined by the 3GPP standard.

Note that the method of forming a transmission beam and a reception beam is not limited to the above method. For example, in the user apparatus 200 having a plurality of antennas, a method of changing the angle of each antenna may be used, or a method using a combination of a method of using a precoding vector and a method of changing the angle of the antenna may be used, a method of switching between different antenna panels may be used, a method of combining a plurality of antenna panels may be used, or another method may be used. Furthermore, for example, in the high frequency band, a plurality of mutually different transmission beams may be used. Using a plurality of transmission beams is referred to as a multi-beam operation, and using one transmission beam is referred to as a single beam operation.

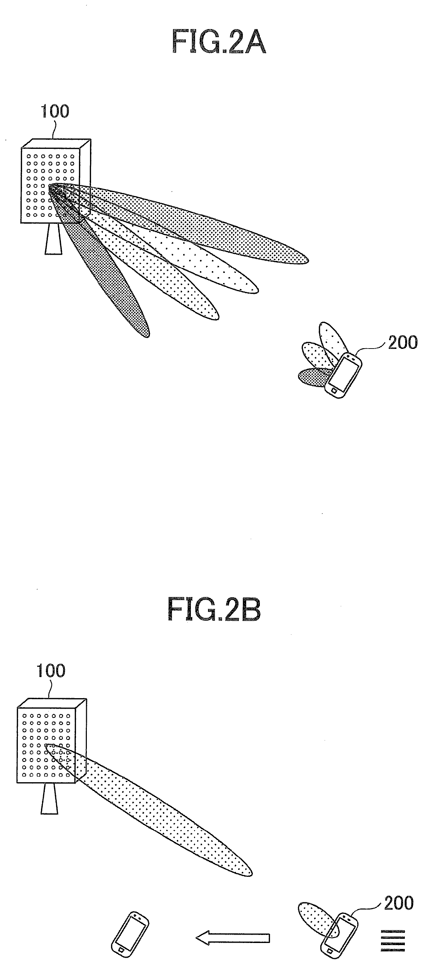

FIG. 2A is a diagram illustrating an example in which the user apparatus 200 selects and receives a plurality of beams transmitted from the base station apparatus 100. As illustrated in FIG. 2A, the base station apparatus 100 transmits a plurality of beams. On the other hand, in the illustrated situation, it is possible to make a configuration in which a plurality of beams can be received by the user apparatus 200. That is, reception beamforming may be performed in the user apparatus 200. The user apparatus 200 selects a beam such that a favorable reception status is achieved.

FIG. 2B illustrates a situation in which the user apparatus 200 moves while the user apparatus 200 is receiving a beam. As the user apparatus 200 moves, the beam presently being received may no longer be the optimal beam, and there may be a need to switch to another beam.

In the embodiment of the present invention, a measurement method for enabling the user apparatus 200 to select, from a plurality of beams, a beam that provides a favorable reception status, is disclosed. Furthermore, according to the embodiment of the present invention, a criterion and a method for switching to another beam when a failure occurs in a link of a beam due to the movement of the user apparatus 200, are disclosed.

Note that as information used for selecting a beam, L1-RSRP (Layer 1 - Reference Signal Reception Power), that is, the reception power in Layer 1, is assumed. However, only the reception power is evaluated, and, therefore, there is a possibility that an optimum beam may not be selected in a situation where interference is strong, and a margin is required.

Furthermore, BLER (Block Error Rate) is assumed as information used for selecting a beam. When BLER is evaluated, the interference, etc., can be taken into consideration, so that it is possible to select an optimum beam from the viewpoint of quality. However, error rates relating to multiple block reception are necessary, and, therefore, it takes time to average the BLER, and evaluation is not easy.

### (Embodiment)

An embodiment will be described below.

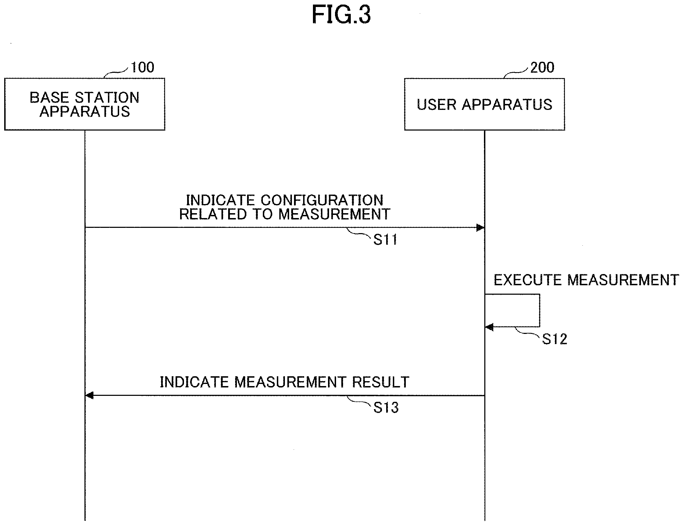

FIG. 3 is a sequence diagram for describing a process according to the embodiment of the present invention, in which the user apparatus 200 reports the measurement result to the base station apparatus 100.

In step S11, the base station apparatus 100 indicates a configuration relating to measurement to the user apparatus 200. The configuration related to measurement may include, for example, the position in the frequency domain and the position in the time domain of the resource in the radio frame to be measured, or may include one of the position in the frequency domain and the position in the time domain. Furthermore, the configuration related to measurement may include a cycle in the case where the resources in the radio frame to be measured are repeatedly arranged. Furthermore, the configuration related to measurement may include information indicating whether the resources in the radio frame are used for CMR (Channel Measurement Resource) or IMR (Interference Measurement Resource). CMR is a resource used for channel measurement, and IMR is a resource used for interference measurement. Furthermore, in the configuration related to measurement, one or more sets of CMR and IMR may be included, or only one or more CMRs or only one or more IMRs may be independently included. Furthermore, the configuration related to measurement may include information indicating the type of measurement result to be reported from the user apparatus 200 to the base station apparatus 100 in step S13.

In step S12, the user apparatus 200 executes measurement based on the indication of the configuration related to measurement indicated in step S11.

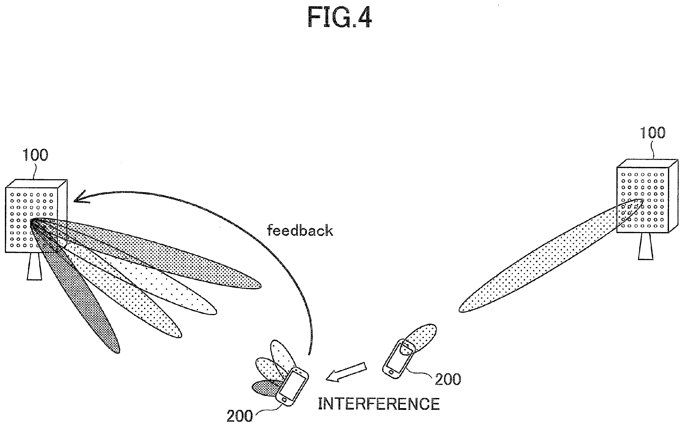

FIG. 4 is a diagram illustrating an example according to the embodiment of the present invention, in which the user apparatus 200 reports the measurement result to the base station apparatus 100. As illustrated in FIG. 4, when receiving the beam transmitted from the base station apparatus 100, the user apparatus 200 may receive interference from a beam transmitted from another base station apparatus 100. The user apparatus 200 performs beam management based on the reception power and the interference power. Beam management is a process related to management of beams, and may include a series of processes related to measurement and selection at the time of receiving beams. The user apparatus 200 measures mainly the reception power in CMR, and measures mainly the interference power in IMR, and feeds back information to the base station apparatus 100 based on the measurement.

Returning to FIG. 3, subsequently, based on the measurement result executed in step S12, the user apparatus 200 may determine a candidate beam to be newly received, and indicate information related to the candidate beam to the base station apparatus 100. The information related to the candidate beam may include any one of a beam index, CMR, and IMR. Note that the determination of the candidate beam and the indication of the information related to the beam candidate may be executed after step S13.

In step S13, the user apparatus 200 indicates the measurement result of the measurement executed in step S12 to the base station apparatus 100. For example, the reported measurement result may include information indicating the best value of RSRP measured in the CMR. Furthermore, for example, the measurement result to be reported may include information indicating the best value of RSSI (Received Signal Strength Indication) measured in IMR. Furthermore, the measurement result to be reported may include information indicating the CQI (Channel Quality Indicator) or the beam index having the best value with respect to the measured RSRP and RSSI.

Furthermore, the measurement result to be reported may include information indicating the best value of RSRQ (Reference Signal Received Quality) or SINR (Signal to Interference plus Noise Ratio) derived from the measured RSRP and RSSI. Furthermore, the measurement result to be reported may include CQI or a beam index having the best value of RSRQ or SINR derived from the measured RSRP and RSSI.

Furthermore, the measurement result to be reported may include a set of CMR in which RSRQ is the best value and IMR in which RSRQ is the best value. Furthermore, the measurement result to be reported may include at least one of CMR in which RSRP is the best value and IMR in which RSSI is the best value.

Furthermore, the user apparatus 200 may select a beam based on the reported measurement result.

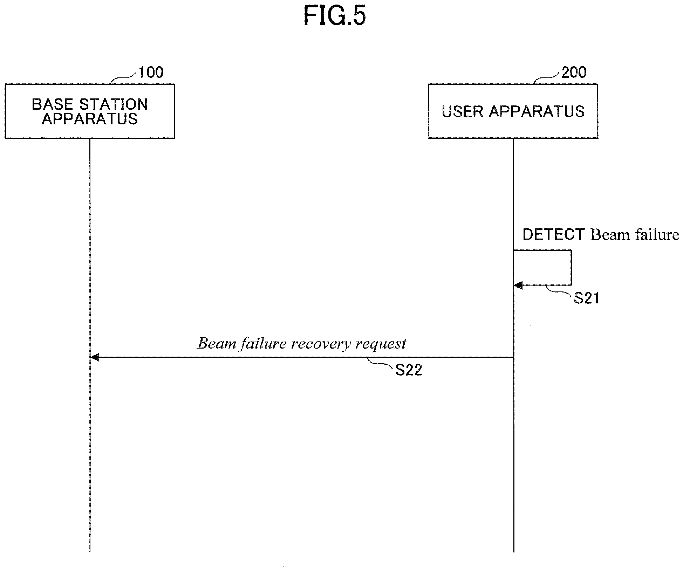

FIG. 5 is a sequence diagram for describing the recovery process at the time of detecting a beam failure according to the embodiment of the present invention.

In step S21, the user apparatus 200 detects a "beam failure". A "beam failure" is a situation in which a failure has occurred in the link of the beam between the user apparatus 200 and the base station apparatus 100.

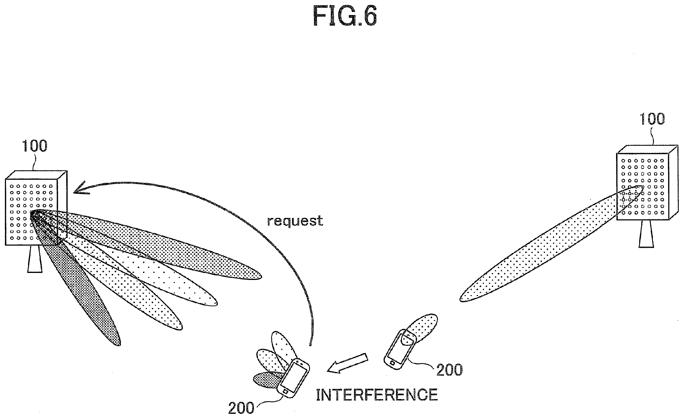

FIG. 6 is a diagram illustrating an example of a process according to the embodiment of the present invention in which the user apparatus 200 requests recovery to the base station apparatus 100. As illustrated in FIG. 6, when receiving a beam transmitted from the base station apparatus 100, there are cases where the user apparatus 200 receives interference due to a beam transmitted from another base station apparatus 100, and a "beam failure" occurs. Alternatively, there are cases where a "beam failure" occurs when the user apparatus 200 moves. When the user apparatus 200 detects a "beam failure", a recovery process for recovering the connection is executed.

Returning to FIG. 5, in step S22, the user apparatus 200 transmits a "beam failure recovery request" to the base station apparatus 100. A "beam failure recovery request" is a message requesting recovery from the "beam failure". Recovery from the "beam failure" is requested to the base station apparatus 200 based on the information related to the reception power or the interference power in the user apparatus 200.

The recovery request from the "beam failure" may be transmitted from the user apparatus 200 to the base station apparatus 100 in the following cases, for example.
1-1) When the instantaneous value of the RSRQ of the presently received beam becomes less than or equal to a predetermined value.
1-2) When the average value in a predetermined period of the RSRQ of the presently received beam becomes less than or equal to a predetermined value.
1-3) When a predetermined period or a predetermined number of slots has elapsed since the instantaneous value of the RSRQ of the presently received beam became less than or equal to a predetermined value.
1-4) When a predetermined period or a predetermined number of slots has elapsed since the average value in the predetermined period of the RSRQ of the presently received beam became less than or equal to a predetermined value.
2-1) When the instantaneous value of the RSRQ of the candidate beam to be newly received becomes greater than or equal to a predetermined value.
2-2) When the average value in a predetermined period of the RSRQ of the candidate beam to be newly received becomes greater than or equal to a predetermined value.
2-3) When a predetermined period or a predetermined number of slots has elapsed since the instantaneous value of the RSRQ of the candidate beam to be newly received became greater than or equal to a predetermined value.
2-4) When a predetermined period or a predetermined number of slots has elapsed since the average value in a predetermined period of the RSRQ of the candidate beam to be newly received became less than or equal to a predetermined value.
3-1) When the instantaneous value of the difference or the ratio between the RSRQ of the presently received beam and the RSRQ of the candidate beam to be newly received becomes greater than or equal to a predetermined value.
3-2) When an average value in a predetermined period of the difference or the ratio between the RSRQ of the presently received beam and the RSRQ of the candidate beam to be newly received becomes greater than or equal to a predetermined value.
3-3) When a predetermined period or a predetermined number of slots elapses after the instantaneous value of the difference or the ratio between the RSRQ of the presently received beam and the RSRQ of the candidate beam to be newly received becomes greater than or equal to a predetermined value.
3-4) When a predetermined period or a predetermined number of slots elapses after the average value in a predetermined period of the difference or the ratio between the RSRQ of the presently received beam and the RSRQ of the candidate beam to be newly received becomes greater than or equal to a predetermined value.

Note that in all of the above cases, the RSRQ may be replaced with RSRP, or may be replaced with RSSI, or may be replaced with SINR, or may be replaced with any combination of RSRQ, RSRP, RSSI and SINR. That is, in all of the above cases, the RSRQ may be replaced with the reception quality, or may be replaced with the reception power, or may be replaced with the interference power.

Furthermore, the user apparatus 200 may select a beam according to an instruction from the base station apparatus 100 based on the reported recovery request.

In the embodiment of the present invention described above, when the user apparatus 200 performs measurement of a beam transmitted from the base station apparatus 100, the user apparatus 200 performs measurement upon receiving, from the base station apparatus 100, an indication of the position in the radio frame of CMR or IMR for measuring the reception power or interference power, and, therefore, the user apparatus 200 can report, to the base station apparatus 100, the measurement result of the beam including the information indicating the reception power or the interference power. Furthermore, when the user apparatus 200 detects a beam failure, the user apparatus 200 can transmit, to the base station apparatus 100, a recovery request to recover from the beam failure, based on the measured reception power or interference power. Furthermore, the user apparatus 200 can execute beam measurement by approximately the same process or required time period as in the case of L1-RSRP, and by further considering the interference power, the user apparatus 200 can obtain a measurement result having higher accuracy than the case of L1-RSRP.

That is, when performing transmission by applying beamforming, it is possible to provide a measurement method and a beam selection criterion that enable the selection of an appropriate beam.

### (Apparatus configuration)

Next, a functional configuration example of the base station apparatus 100 and the user apparatus 200 that execute the processes and operations described above will be described. Each of the base station apparatus 100 and the user apparatus 200 includes at least functions for implementing the embodiment. However, each of the base station apparatus 100 and the user apparatus 200 may have only some of the functions in the embodiment.

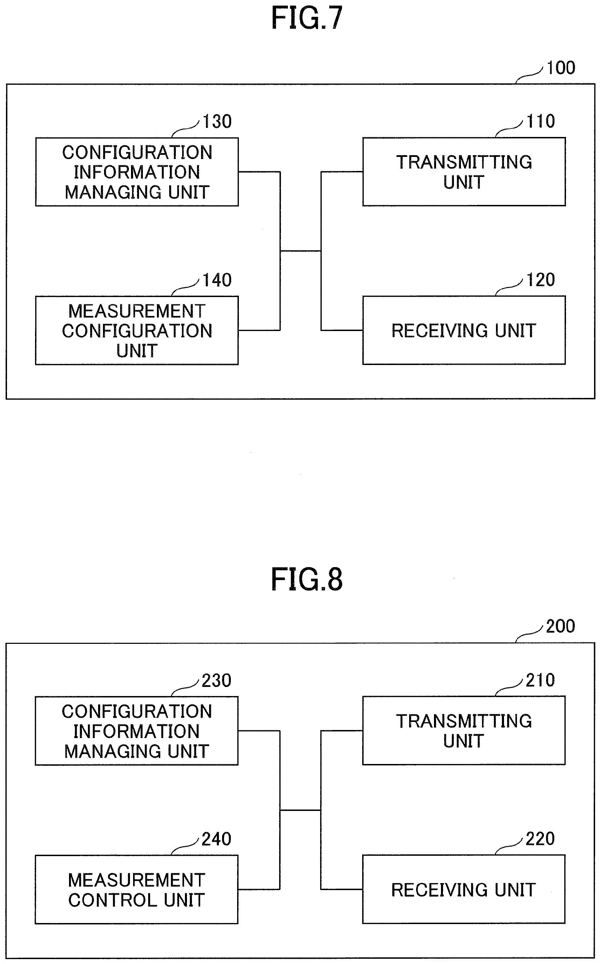

FIG. 7 is a diagram illustrating an example of a functional configuration of the base station apparatus 100. As illustrated in FIG. 7, the base station apparatus 100 includes a transmitting unit 110, a receiving unit 120, a configuration information managing unit 130, and a measurement configuration unit 140. The functional configuration illustrated in FIG. 7 is merely an example. As long as the operations according to the embodiment of the present invention can be executed, the functional sections and the names of the functional units may be any section or name.

The transmitting unit 110 includes a function of generating signals to be transmitted to the user apparatus 200 and wirelessly transmitting the signals. The receiving unit 120 includes a function of receiving various signals transmitted from the user apparatus 200 and acquiring, for example, information of a higher layer from the received signals. Furthermore, the transmitting unit 110 has a function of transmitting NR-PSS, NR-SSS, NR-PBCH, DL/UL control signals, etc., to the user apparatus 200. Furthermore, the transmitting unit 110 transmits information related to the transmission power control, information related to the scheduling, and information related to the measurement configuration to the user apparatus 200, and the receiving unit 120 receives a message related to the report of the measurement result from the user apparatus 200.

The configuration information managing unit 130 stores preset configuration information and various kinds of configuration information to be transmitted to the user apparatus 200. The content of the configuration information is, for example, information used for measurement configuration in the user apparatus 200.

The measurement configuration unit 140 performs control related to the generation of information used for the configuration of the measurement executed in the user apparatus 200, and control related to the processing of the measurement result received from the user apparatus 200, described in the embodiment.

FIG. 8 is a diagram illustrating an example of a functional configuration of the user apparatus 200. As illustrated in FIG. 8, the user apparatus 200 includes a transmitting unit 210, a receiving unit 220, a configuration information managing unit 230, and a measurement control unit 240. The functional configuration illustrated in FIG. 8 is merely an example. As long as the operations according to the embodiment of the present invention can be executed, the functional sections and the names of the functional units may be any section or name.

The transmitting unit 210 creates transmission signals from transmission data and wirelessly transmits the transmission signals. The receiving unit 220 wirelessly receives various signals, and acquires signals of a higher layer from the received signals of the physical layer. Furthermore, the receiving unit 220 has a function of receiving NR-PSS, NR-SSS, NR-PBCH, DL/UL control signals, etc., transmitted from the base station apparatus 100. Furthermore, the transmitting unit 210 transmits a message related to the measurement result indication to the base station apparatus 100, and the receiving unit 220 receives the information used for the measurement configuration from the base station apparatus 100.

The configuration information managing unit 230 stores various kinds of configuration information received from the base station apparatus 100 by the receiving unit 220. Furthermore, the configuration information managing unit 230 also stores preset configuration information. The content of the configuration information is, for example, information pertaining to configurations for executing measurement, etc.

The measurement control unit 240 performs control relating to execution of measurement in the user apparatus 200 described in the embodiment. Note that the functional unit relating to the measurement result transmission, etc., in the measurement control unit 240 may be included in the transmitting unit 210 and the functional unit relating to the configuration reception relevant to measurement in the measurement control unit 240 may be included in the receiving unit 220.

### (Hardware configuration)

The functional configuration diagrams (FIGS. 7 and 8) used for describing the embodiment of the present invention described above are blocks of functional units. These functional blocks (constituent units) are implemented by any combination of hardware and/or software. Means for implementing each functional block is not particularly limited. That is, each functional block may be implemented by one device in which a plurality of elements are physically and/or logically combined, or two or more devices physically and/or logically separated may be directly and/or indirectly (for example, in a wired and/or wireless manner) connected to each other, and each functional block may be implemented by these plural devices.

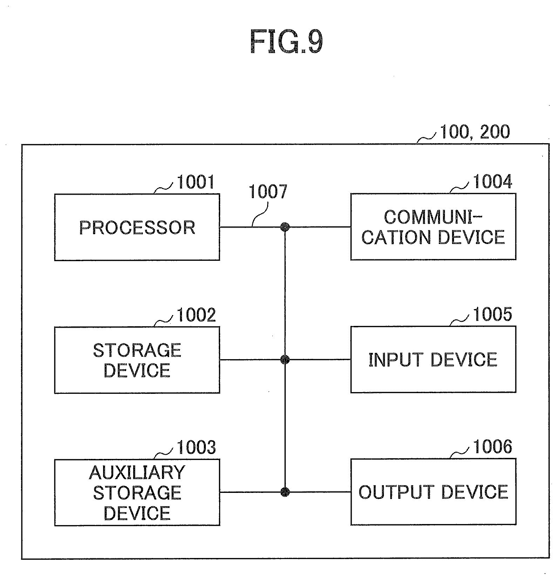

Furthermore, for example, the base station apparatus 100 and the user apparatus 200 according to the embodiment of the present invention may both function as a computer that performs processes according to the embodiment of the present invention. FIG. 9 is a diagram illustrating an example of a hardware configuration of a radio communication apparatus that is the base station apparatus 100 or the user apparatus 200 according to the embodiment of the present invention. Each of the base station apparatus 100 and the user apparatus 200 described above may be formed as a computer apparatus physically including a processor 1001, a storage device 1002, an auxiliary storage device 1003, a communication device 1004, an input device 1005, an output device 1006, a bus 1007, etc.

Note that in the following description, the term "device" can be read as a circuit, a device, a unit, etc. The hardware configuration of the base station apparatus 100 and the user apparatus 200 may be configured to include one or a plurality of devices denoted by 1001 to 1006 illustrated in the figure, or may be configured to not include some of the devices.

The functions of the base station apparatus 100 and the user apparatus 200 are implemented by loading predetermined software (program) in hardware such as the processor 1001 and the storage device 1002, computing by the processor 1001, communicating by the communication device 1004, and controlling the reading and/or writing of data in the storage device 1002 and the auxiliary storage device 1003.

The processor 1001 operates, for example, the operating system to control the entire computer. The processor 1001 may be formed of a central processing unit (CPU) including an interface with a peripheral device, a control device, an arithmetic device, and a register, etc.

Furthermore, the processor 1001 loads a program (program code), a software module, or data from the auxiliary storage device 1003 and/or the communication device 1004, into the storage device 1002, and executes various processes according to the program, the software module, or the data. As the program, a program for causing a computer to execute at least part of the operations described in the above embodiment is used. For example, the transmitting unit 110, the receiving unit 120, the configuration information managing unit 130, and the measurement configuration unit 140 of the base station apparatus 100 illustrated in FIG. 7 may be implemented by a control program stored in the storage device 1002 and operating on the processor 1001. Furthermore, for example, the transmitting unit 210, the receiving unit 220, the configuration information managing unit 230, and the measurement control unit 240 of the user apparatus 200 illustrated in FIG. 8 may be implemented by a control program stored in the storage device 1002 and operating on the processor 1001. Although it has been described that the above-described various processes are executed by one processor 1001, the processes may be executed simultaneously or sequentially by two or more processors 1001. The processor 1001 may be implemented with one or more chips. Note that the program may be transmitted from the network via an electric communication line.

The storage device 1002 is a computer-readable recording medium and may be formed of at least one of a ROM (Read Only Memory), an EPROM (Erasable Programmable ROM), an EEPROM (Electrically Erasable Programmable ROM), and a RAM (Random Access Memory). The storage device 1002 may be referred to as a register, a cache, and a main memory, etc. The storage device 1002 can store executable programs (program codes), software modules, etc., for implementing the process according to the embodiment of the present invention.

The auxiliary storage device 1003 is a computer-readable recording medium, and may be formed of, for example, at least one of an optical disk such as a CD-ROM (Compact Disc ROM), a hard disk drive, a flexible disk, a magneto-optical disk (for example, a compact disk, a digital versatile disk, and a Blu-ray (registered trademark) disk), a smart card, a flash memory (for example, a card, a stick, and a key drive), a floppy (registered trademark) disk, and a magnetic strip, etc. The auxiliary storage device 1003 may be referred to as a secondary storage device. The above-described storage medium may be, for example, a database including the storage device 1002 and/or the auxiliary storage device 1003, a server, or another appropriate medium.

The communication device 1004 is hardware (transmission/reception device) for performing communication between computers via a wired and/or wireless network, and is also referred to as a network device, a network controller, a network card, and a communication module, etc., for example. For example, the transmitting unit 110 and the receiving unit 120 of the base station apparatus 100 may be implemented by the communication device 1004. Furthermore, the transmitting unit 210 and the receiving unit 220 of the user apparatus 200 may be implemented by the communication device 1004.

The input device 1005 is an input device (for example, a keyboard, a mouse, a microphone, a switch, a button, and a sensor, etc.) that accepts input from the outside. The output device 1006 is an output device (for example, a display, a speaker, and an LED lamp, etc.) that performs output to the outside. Note that the input device 1005 and the output device 1006 may be integrated (for example, a touch panel).

Furthermore, the respective devices such as the processor 1001 and the storage device 1002 are connected by a bus 1007 for communicating information. The bus 1007 may be formed of a single bus or may be formed of different buses between the devices.

Furthermore, each of the base station apparatus 100 and the user apparatus 200 may include hardware such as a microprocessor, a digital signal processor (DSP), an application specific integrated circuit (ASIC), a programmable logic device (PLD), and a field programmable gate array (FPGA), and a part of or all of the functional blocks may be implemented by the hardware. For example, the processor 1001 may be implemented with at least one of these hardware elements.

### (Overview of embodiment)

As described above, according to the embodiment of the present invention, there is provided a user apparatus for communicating with a base station apparatus via radio signals to which beamforming is applied, the user apparatus including a receiving unit configured to receive a beam transmitted from the base station apparatus; a control unit configured to execute measurement of reception power and interference power of the beam transmitted from the base station apparatus; and a transmitting unit configured to transmit information based on a result of the measurement to the base station apparatus.

With the above configuration, the user apparatus 200 can measure the beam transmitted from the base station apparatus 100 and report the measurement result of measuring the beam, including the information indicating the reception power or the interference power, to the base station apparatus 100. That is, it is possible to provide a measurement method and a beam selection criterion that enable selection of an appropriate beam, when performing transmission by applying beamforming.

The receiving unit receives, from the base station apparatus, a first position indicating a frequency domain and a time domain in a radio frame in which a resource used for the measurement of the reception power is arranged, and a second position indicating a frequency domain and a time domain in a radio frame in which a resource used for the measurement of the interference power is arranged, the control unit determines a candidate beam to be newly received based on the result of the measurement, and transmits, to the base station apparatus, information relating to the candidate beam, before or after the information based on the result of the measurement is transmitted, and the information relating to the candidate beam may include at least one of a beam index, the first position, and the second position. With this configuration, the user apparatus 200 can receive, from the base station apparatus 100, the position of CMR or IMR, for measuring the reception power or the interference power, in a radio frame, and use the position for measurement. Furthermore, the user apparatus 200 can determine the candidate beam and transmit the information on the candidate beam to the base station apparatus.

The result of the measurement may include at least one of a best value of RSRP measured at the first position and a best value of RSSI measured at the second position, a best value of RSRQ or a best value of SINR derived from the RSRP measured at the first position and the RSSI measured at the second position, CQI or a beam index calculated from the derived best value of the RSRQ or the derived best value of the SINR, information indicating a set of the first position at which the best value of the RSRP is measured and the second position at which the best value of the RSRP is measured, and information indicating the first position at which the best value of the RSRP is measured or the second position at which the best value of the RSSI is measured. With this configuration, the user apparatus 200 can report, to the base station apparatus, the measurement result based on the reception power, the interference power, or the reception quality measured in CMR or IMR, so that the measurement result can be used as a beam selection criterion.

The control unit may detect a link failure of the beam, and transmit, to the base station apparatus, a beam recovery request, the beam recovery request including the information based on the result of the measurement. With this configuration, upon detection of a beam failure in the user apparatus 200, it is possible to transmit a beam recovery request to the base station apparatus 100 and to start a recovery procedure for receiving a favorable beam.

The beam recovery request may be transmitted to the base station apparatus, when any one of following cases is satisfied: when an instantaneous value or an average value in a predetermined period of reception quality, the reception power, or the interference power of a presently received beam becomes less than or equal to a predetermined value; when a predetermined period or a predetermined number of slots has elapsed since an instantaneous value or an average value in a predetermined period of reception quality, the reception power, or the interference power of a presently received beam became less than or equal to a predetermined value; when an instantaneous value or an average value in a predetermined period of reception quality, the reception power, or the interference power of a candidate beam to be newly received becomes greater than or equal to a predetermined value; when a predetermined period or a predetermined number of slots has elapsed since an instantaneous value or an average value in a predetermined period of reception quality, the reception power, or the interference power of a candidate beam to be newly received became greater than or equal to a predetermined value; when an instantaneous value or an average value in a predetermined period of a difference or a ratio in reception quality, the reception power, or the interference power between a presently received beam and a candidate beam to be newly received becomes greater than or equal to a predetermined value; and when a predetermined period or a predetermined number of slots has elapsed since an instantaneous value or an average value in a predetermined period of a difference or a ratio in reception quality, the reception power, or the interference power between a presently received beam and a candidate beam to be newly received became greater than or equal to a predetermined value. With this configuration, the user apparatus 200 can trigger a beam recovery request based on the measurement result of the present beam or a candidate beam to be newly received, and can select and receive a favorable beam.

Furthermore, according to the embodiment of the present invention, there is provided a base station apparatus for communicating with a user apparatus via radio signals to which beamforming is applied, the base station apparatus including a transmitting unit configured to transmit a beam to the user apparatus; a receiving unit configured to receive information based on measurement of reception power and interference power of the beam, the measurement being executed at the user apparatus; and a configuration unit configured to indicate, to the user apparatus, a position indicating a frequency domain and a time domain in a radio frame in which a resource used for the measurement of the reception power is arranged, and a position indicating a frequency domain and a time domain in a radio frame in which a resource used for the measurement of the interference power is arranged.

With the above configuration, the base station apparatus 100 indicates, to the user apparatus 200, the position of the resource for measuring the reception power or the interference power, and receives the measurement result, thereby selecting and transmitting a favorable beam for the user apparatus 200. That is, it is possible to provide a measurement method and a beam selection criterion that enable selection of an appropriate beam, when performing transmission by applying beam forming.

### (Supplement of embodiment)

The embodiment of the present invention is described above; however the disclosed invention is not limited to the embodiment, and a person ordinarily skilled in the art will appreciate various variations, modifications, alternatives, replacements, and so forth. Specific examples of numerical values are used in the description in order to facilitate understanding of the invention. However, these numerical values are merely an example, and any other appropriate values may be used, except as indicated otherwise. The separations of the items in the above description are not essential to the present invention. Depending on necessity, subject matter described in two or more items may be combined and used, and subject matter described in an item may be applied to subject matter described in another item (provided that they do not contradict). A boundary of a functional unit or a processor in the functional block diagrams may not necessarily correspond to a boundary of a physical component. An operation by a plurality of functional units may be physically executed by a single component, or an operation of a single functional unit may be physically executed by a plurality of components. The order of the processes in each of the processing procedures described in the embodiment may be re-arranged, provided that they do not contradict. For the convenience of description, the base station apparatus 100 and the user apparatus 200 are described by using the functional block diagrams; however, such devices may be implemented in hardware, software, or combinations thereof. The software to be executed by the processor included in the base station apparatus 100 in accordance with the embodiment of the present invention and the software to be executed by the processor included in the user apparatus 200 may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, and so forth.

Furthermore, notification of information is not limited to the aspect/embodiment described in the present specification and may be performed by other methods. For example, notification of information may be performed via physical layer signaling (for example, Downlink Control Information (DCI) or Uplink Control Information (UCI)), upper-layer signaling (for example, RRC (Radio Resource Control) signaling, MAC (Medium Access Control) signaling, broadcast information (Master Information Block (MIB), or System Information Block (SIB))), other signals, or by a combination thereof. Moreover, an RRC message may be referred to as the RRC signaling. Furthermore, RRC signaling may be referred to as the RRC message, and may be an RRC connection setup (RRC Connection Setup) message, a RRC connection reconfiguration (RRC Connection Reconfiguration) message, etc., for example.

Furthermore, each aspect/embodiment described in this specification can be applied to long term evolution (LTE), LTE-advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-Wideband (UWB), Bluetooth (registered trademark), any other systems using an appropriate system and/or next generation systems expanded on the basis of these systems.

In addition, processing procedures, sequences, flowcharts, etc., of each embodiment/modified example described in the specification may be exchanged as long as there is no inconsistency. For example, for the methods described in the specification, the elements of the various steps are presented in an exemplary order and are not limited to a specific order presented.

Certain operations performed by the base station apparatus 100 as described in the present specification may be performed by its upper node in some cases. In a network including one or more network nodes having base station apparatuses 100, various operations performed to communicate with user apparatuses 200 may be apparently performed by the base station apparatuses 100 and/or network nodes other than the base station apparatuses 100 (for example, a MME or an S-SW can be assumed, but the network nodes are not limited to them). Although it has been described that the single network node other than the base station apparatuses 100 is used in the above example, combinations of multiple other network nodes (for example, an MME and an S-GW) may be used.

Each aspect/embodiment described in this specification may be used alone, may be used in combination, or may be used while being switched during the execution.

The user apparatus 200 may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or any other appropriate terminologies.

The base station apparatus 100 may be referred to by those skilled in the art as NB (Node B), eNB (enhanced Node B), gNB, base station, or some other suitable terminology.

The terms "determining" and "deciding" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The expression "on the basis of" used in the present specification does not mean "on the basis of only" unless otherwise stated particularly. In other words, the expression "on the basis of" means both "on the basis of only" and "on the basis of at least".

As long as the terminologies "include", "including" and variations thereof are used in the present specification or claims, these terminologies are intended to be inclusive similar to the terminology "comprising". Furthermore, the terminology "or" as used in the present specification or claims is intended not to be an exclusive OR.

In the entire present disclosure, for example, if articles are added by translation, such as a, an, and the in English, these articles may indicate plurality, unless it is clearly indicated from the context that these articles do not indicate plurality.

Note that in the embodiment of the present invention, the measurement control unit 240 is an example of a control unit. The measurement configuration unit 140 is an example of a configuration unit. CMR is an example of a resource used for measuring the reception power. IMR is an example of a resource used for measuring the interference power. Beam Failure is an example of a link failure of the beam.

Although the present invention has been described in detail, it is apparent to those skilled in the art that the present invention is not limited to the embodiments as described in the present specification. The present invention can be implemented as modifications and variations without departing from the sprit and scope of the present invention as defined in claims. Thus, the description in the present specification is intended for exemplary description and does not mean any restriction to the present invention.

### [Reference Signs List]

- 100: base station apparatus
- 110: transmitting unit
- 120: receiving unit
- 130: configuration information managing unit
- 140: measurement configuration unit
- 200: user apparatus
- 210: transmitting unit
- 220: receiving unit
- 230: configuration information managing unit
- 240: measurement control unit
- 1001: processor
- 1002: storage device
- 1003: auxiliary storage device
- 1004: communication device
- 1005: input device
- 1006: output device

## Claims

1. A user apparatus for communicating with a base station apparatus via radio signals to which beamforming is applied, the user apparatus comprising:
a receiving unit configured to receive a beam transmitted from the base station apparatus;
a control unit configured to execute measurement of reception power and interference power of the beam transmitted from the base station apparatus; and
a transmitting unit configured to transmit information based on a result of the measurement to the base station apparatus.

2. The user apparatus according to claim 1, wherein
the receiving unit receives, from the base station apparatus, a first position indicating a frequency domain and a time domain in a radio frame in which a resource used for the measurement of the reception power is arranged, and a second position indicating a frequency domain and a time domain in a radio frame in which a resource used for the measurement of the interference power is arranged,
the control unit determines a candidate beam to be newly received based on the result of the measurement, and transmits, to the base station apparatus, information relating to the candidate beam, before or after the information based on the result of the measurement is transmitted, and
the information relating to the candidate beam includes at least one of a beam index, the first position, and the second position.

3. The user apparatus according to claim 2, wherein
the result of the measurement includes at least one of
a best value of RSRP measured at the first position and a best value of RSSI measured at the second position,
a best value of RSRQ or a best value of SINR derived from the RSRP measured at the first position and the RSSI measured at the second position,
CQI or a beam index calculated from the derived best value of the RSRQ or the derived best value of the SINR,
information indicating a set of the first position at which the best value of the RSRP is measured and the second position at which the best value of the RSRP is measured, and
information indicating the first position at which the best value of the RSRP is measured or the second position at which the best value of the RSSI is measured.

4. The user apparatus according to claim 1, wherein the control unit detects a link failure of the beam, and transmits, to the base station apparatus, a beam recovery request including the information based on the result of the measurement.

5. The user apparatus according to claim 4, wherein the beam recovery request is transmitted to the base station apparatus, when any one of following cases is satisfied:
when an instantaneous value or an average value in a predetermined period of reception quality, the reception power, or the interference power of a presently received beam becomes less than or equal to a predetermined value;
when a predetermined period or a predetermined number of slots has elapsed since an instantaneous value or an average value in a predetermined period of reception quality, the reception power, or the interference power of a presently received beam became less than or equal to a predetermined value;
when an instantaneous value or an average value in a predetermined period of reception quality, the reception power, or the interference power of a candidate beam to be newly received becomes greater than or equal to a predetermined value;
when a predetermined period or a predetermined number of slots has elapsed since an instantaneous value or an average value in a predetermined period of reception quality, the reception power, or the interference power of a candidate beam to be newly received became greater than or equal to a predetermined value;
when an instantaneous value or an average value in a predetermined period of a difference or a ratio in reception quality, the reception power, or the interference power between a presently received beam and a candidate beam to be newly received becomes greater than or equal to a predetermined value; and
when a predetermined period or a predetermined number of slots has elapsed since an instantaneous value or an average value in a predetermined period of a difference or a ratio in reception quality, the reception power, or the interference power between a presently received beam and a candidate beam to be newly received became greater than or equal to a predetermined value.

6. A base station apparatus for communicating with a user apparatus via radio signals to which beamforming is applied, the base station apparatus comprising:
a transmitting unit configured to transmit a beam to the user apparatus;
a receiving unit configured to receive information based on measurement of reception power and interference power of the beam, the measurement being executed at the user apparatus; and
a configuration unit configured to indicate, to the user apparatus, a position indicating a frequency domain and a time domain in a radio frame in which a resource used for the measurement of the reception power is arranged, and a position indicating a frequency domain and a time domain in a radio frame in which a resource used for the measurement of the interference power is arranged.
